# Europäisches Patentamt

(19) **European Patent Office**

**Office européen des brevets**

(11) Publication number: **0 144 473**
**B1**

(12) **EUROPEAN PATENT SPECIFICATION**

(45) Date of publication of patent specification: **22.04.87**

(51) Int. Cl.⁴: **B 60 S 13/02**

(21) Application number: **83307486.7**

(22) Date of filing: **08.12.83**

(54) **Motor vehicle turntable.**

<table>
<tr>
<td>

(43) Date of publication of application:
**19.06.85 Bulletin 85/25**

(45) Publication of the grant of the patent:
**22.04.87 Bulletin 87/17**

(84) Designated Contracting States:
**AT BE CH DE FR GB IT LI NL SE**

(56) References cited:
**GB-A-1 408 575**
**GB-A-2 061 208**

</td>
<td>

(73) Proprietor: **K.G. COLES & CO. PTY LIMITED**
**17 Bourke Road**
**Alexandria New South Wales 2015 (AU)**

(72) Inventor: **Dehring, Alexander**
**27 Amalfi Crescent**
**Norwa New South Wales 2541 (AU)**

(74) Representative: **Needle, Jacqueline et al**
**PAGE, WHITE & FARRER 5 Plough Place New**
**Fetter Lane**
**London EC4A 1HY (GB)**

</td>
</tr>
</table>

Courier Press, Leamington Spa, England.

# Description

This invention relates to turntables for motor vehicles, and has as its object the provision of a turntable which is suitable for domestic application to eliminate the necessity of reversing a vehicle out of a driveway. A turntable of this kind is described for example in the British patent GB—A—1,408,575.

Turntables manufactured in accordance with the present invention require no source of motive power other than the weight of the vehicle itself, due to the disposition of the axis of rotation of the turntable.

An embodiment of the present invention will be described, by way of example only, with reference to the accompanying drawings in which:

Fig. 1 is a schematic isometric view of a turntable embodying the present invention;

Fig. 2 is a side elevation of the turntable;

Fig. 3 is an end elevation of the turntable;

Fig. 4 is a plan view of an arresting mechanism for the turntable of Figs. 1 to 3; and

Fig. 5 is a partly sectioned elevation of the arresting mechanism.

The illustrated turntable 10, which may comprise sheets of non-skid surfaced steel and a supporting steel framework, is mounted for rotation on a bearing 11, which is preferably a double ball race bearing in which downward and horizontal loads are taken respectively by thrust and radial balls.

The bearing 11, shown only schematically here, is fixed to a concrete slab 12 set in the ground, in such a way that the axis of the bearing is not vertical, but is tilted from the vertical V by an angle *a* in the longitudinal direction of the turntable, and an angle *b* in the transverse direction of the turntable.

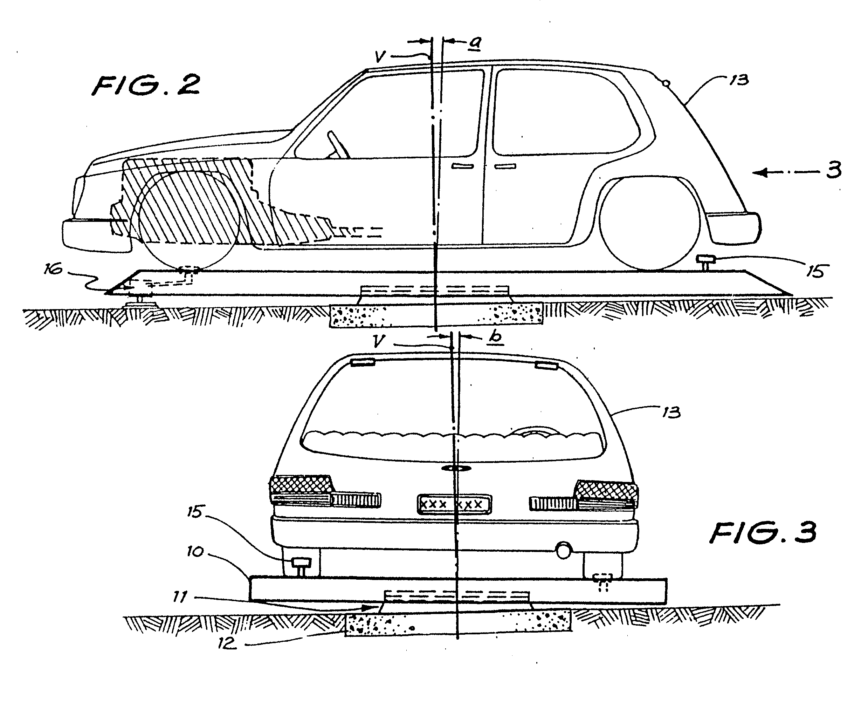

The turntable 10 thus slopes downwardly to the right as viewed in Fig. 2, and this facilitates the entry on to the turntable of a car 13 driven from a driveway (not shown). The turntable also slopes downwardly from left to right as seen in Fig. 3, at the angle *b* to the horizontal.

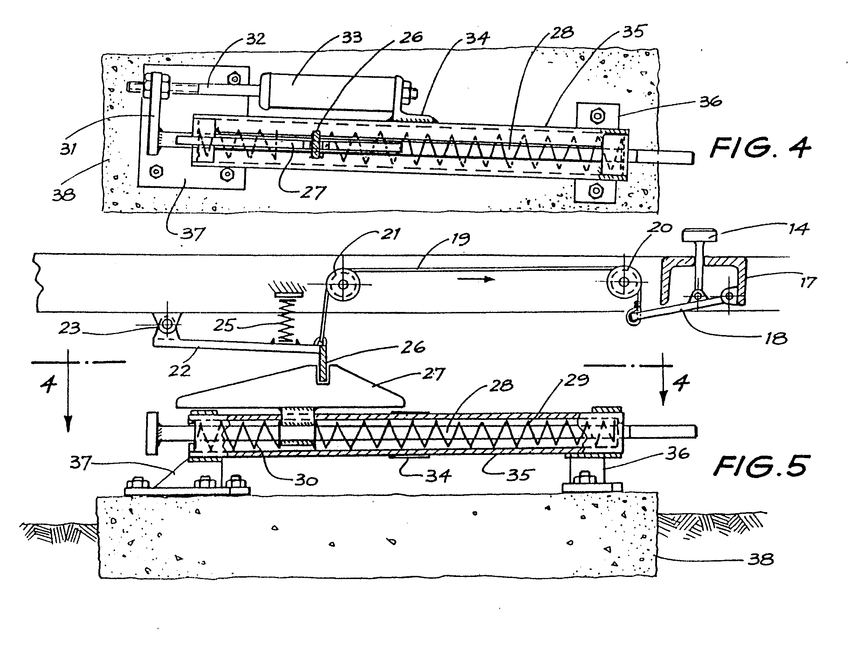

Two actuators 14 and 15 are located at diagonally opposite positions on the turntable 10. As illustrated in Fig. 5, the actuator 14 is attached to a lever 18 which pivots on a lateral frame member 17. Attached to the free end of the lever 18 is a cable 19, which passes around pulleys 20 and 21 and is attached to the free end of a further lever 22, pivoted on a longitudinal frame member 24. Depression of the actuator 14 will therefore cause the cable 19 to be drawn to the right as viewed in Fig. 5, lifting the end of the lever 22 against the action of a return spring shown schematically at 25.

Mounted on and extending downwardly from the end of the lever 22 is a detent blade 26, which in the locked and stationary position of the turntable as illustrated, is engaged within a slot in a catch plate 27.

The plate 27 is mounted on a rod 28 which extends through an elongated housing 35, the rod being located by its passage through apertures at each end of the housing 35. Between the plate 27 and the right-hand end of the body 35 as viewed in Fig. 5 is a helical compression spring 29, and between the plate 27 and the left-hand end of the housing 35 is a further compression spring 30, while the piston 32 of a double acting hydraulic damper 33 is attached by means of a bracket 31 to the left-hand end of the rod 28. The damper 33 is mounted on the housing 35 by means of a bracket 34.

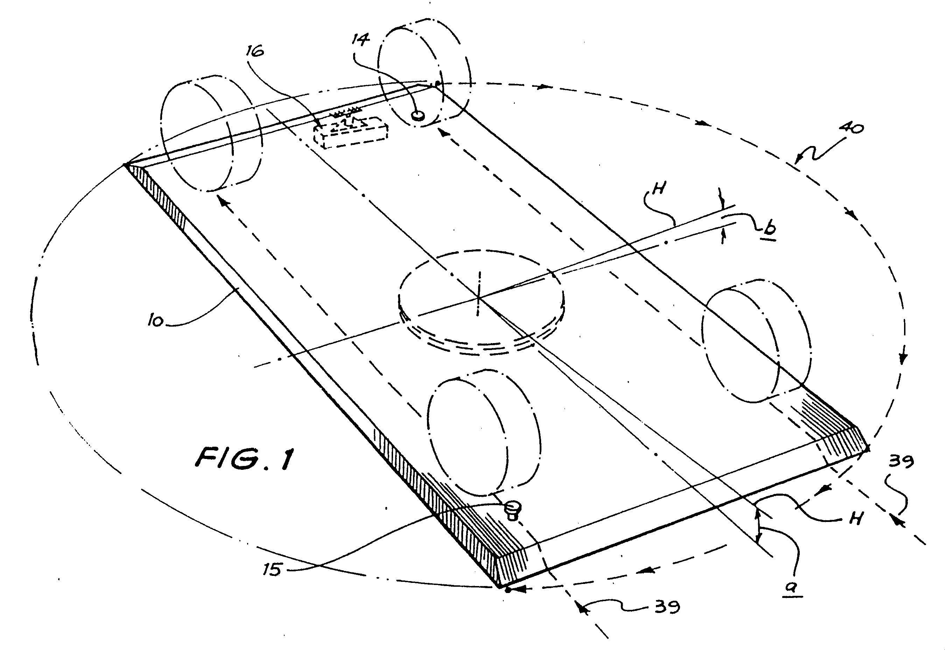

The turntable arresting assembly thus far described, is mounted by means of brackets 36 and 37 on a concrete slab 38, and located as schematically illustrated in Figs. 1 and 2, where this assembly is shown at 16.

If a car is now driven on to the turntable to the position illustrated in Figs. 2 and 3, there will be a tendency for the turntable to rotate in a clockwise direction as viewed in Fig. 1 (and as shown by the arrows 40) due to the fact that the portion of the car beyond and above the bearing 11 will exceed the weight of the portion of the car below the bearing, due to the location of the engine at the front of the car.

As the car reaches the position illustrated in Figs. 2 and 3, its off-side front wheel will roll over the actuator 14, and the detent blade 26 will consequently be released from the plate 27. The turntable will now rotate through the path 40, and when this rotation has proceeded through 180°, the detent blade 26 associated with the actuator 15 will contact the catch plate 27, riding up the plate and entering the retaining slot. The inertia of the turntable and vehicle will cause the turntable to continue rotation against the action of the spring 29, and, upon recoil, against the spring 30, these movements being damped by the damper 33. The vehicle may then be driven off the turntable onto the driveway, and the turntable will be ready for its next operation.

It will be appreciated that while the turntable of the present invention has been described in relation to one embodiment only, it is capable of embodiment in many other forms. For example, it is not restricted to operation between positions spaced by 180°, but may, for example, be arranged to move through 90° to facilitate manoeuvering the vehicle in a restricted space. Other possible variations will be apparent to those skilled in the art.

## Claims

1. A motor vehicle turntable comprising rotatable vehicle support means characterised in that the axis of rotation of said support means is inclined relative to orthogonal vertical planes.

2. A motor vehicle turntable according to claim 1 wherein said support means is substantially symmetrical and is supported by means of a centrally located bearing.

3. A turntable according to claim 1 or claim 2 further comprising stop means located in the path of rotation of said support means and first and second detent means located at diagonally opposite positions on said support means, each of said first and second detent means being engageable with said stop means to prevent or arrest rotation of said turntable.

4. A turntable according to claim 3 wherein each detent means comprises an actuating member operable by a wheel of a vehicle, the arrangement being such that the detent means engaged with said stop means is released therefrom by such operation of the respective actuating member when a vehicle is driven fully on to said turntable.

5. A turntable according to claim 3 wherein each said detent means automatically engages said stop means upon rotation of said support means through 180° following release of the other of said detent means from said stop means.

**Patentansprüche**

1. Motorfahrzeug-Drehscheibe mit einem drehbaren Fahrzeug-Trägermittel, dadurch gekennzeichnet, dass die Rotationsachse des Trägermittels relativ zu orthogonalen Vertikalebenen geneigt ist.

2. Motorfahrzeug-Drehscheibe nach Patentanspruch 1, dadurch gekennzeichnet, dass die Trägermittel im wesentlichen symmetrisch und durch ein zentrisch angeordnetes Lager gehalten ist.

3. Motorfahrzeug-Drehscheibe nach Patentanspruch 1 oder 2, gekennzeichnet durch Anhaltemittel, die im Rotationsweg des Trägermittels angeordnet sind und erste und zweite Feststellmittel, welche an diagonal gegenüberliegenden Lagen des Stützmittels vorgesehen sind, wobei jedes der ersten und zweiten Feststellmittel in Eingriff mit den Anhaltemitteln bringbar sind, um die Rotation der Drehscheibe zu verhindern oder anzuhalten.

4. Motorfahrzeug-Drehscheibe nach Patentanspruch 3, dadurch gekennzeichnet, dass jedes Feststellmittel ein Betätigungsmittel umfasst, welches durch ein Rad eines Fahrzeuges betriebsfähig ist, wobei die Anordnung eine solche ist, dass das in Eingriff mit dem Anhaltemittel stehende Feststellmittel durch eine Betätigung des entsprechenden Betätigungsmittel davon gelöst wird, wenn ein Fahrzeug vollständig auf die Drehscheibe gefahren ist.

5. Motorfahrzeug-Drehscheibe nach Patentanspruch 4, dadurch gekennzeichnet, dass jedes der Feststellmittel nach Rotation der Trägermittel um 180° nach der Freigabe des andern Feststellmitteln von den Anhaltemitteln automatisch in Eingriff mit den Anhaltemitteln gelangt.

**Revendications**

1. Plaque tournante pour véhicule à moteur comprenant un moyen de support pour véhicule rotatif, caractérisée en ce que l'axe de rotation du moyen de support est incliné par rapport à des plans verticaux, octogonaux.

2. Plaque tournante pour véhicule à moteur suivant la revendication 1, caractérisée en ce que le moyen de support susdit est essentiellement symétrique et en ce qu'il est supporté par un palier agencé centralement.

3. Plaque tournante suivant l'une ou l'autre des revendications 1 et 2, caractérisée en ce qu'elle comprend en outre un moyen d'arrêt agencé dans le parcours de rotation du moyen de support précité ainsi que des premier et second moyens de blocage agencés dans des positions diagonalement opposées sur le moyen de support, chacun de ces premier et second moyens de blocage pouvant être engagé par le moyen d'arrêt précité pour empêcher ou arrêter la rotation de la plaque tournante.

4. Plaque tournante suivant la revendication 3, caractérisée en ce que chaque moyen de blocage comprend un organe de commande activable par une roue d'un véhicule, l'agencement étant tel que le moyen de blocage engagé par le moyen d'arrêt précité est libéré de celui-ci par l'activation de l'organe de commande respectif lorsqu'un véhicule est totalement entraîné sur la plaque tournante.

5. Plaque tournante suivant la revendication 3, caractérisée en ce que chaque moyen de blocage engage automatiquement le moyen d'arrêt précité lors de la rotation du moyen de support de 180° après la libération de l'autre moyen de blocage de ce moyen d'arrêt.

FIG.1

FIG.2

*V* $\quad\overset{a}{\longleftrightarrow}$

13

← 3

16

15

*V* $\quad\overset{b}{\longleftrightarrow}$

13

15

10

11

FIG.3

12

0 144 473

FIG. 4

FIG. 5

0 144 473